# EUROPÄISCHE PATENTSCHRIFT

(11) **EP 2 817 537 B1**
(45) Veröffentlichungstag und Bekanntmachung des Hinweises auf die Patenterteilung: **06.01.2016**
(21) Anmeldenummer: 13700651.6
(22) Anmeldetag: 10.01.2013
(51) Int. Cl.: F16H 3/66

(54) **MEHRSTUFENGETRIEBE**
MULTI-RATIO TRANSMISSION
BOÎTE DE VITESSES MULTI-ÉTAGÉE

(30) Priorität: 24.02.2012 DE 102012202813
(43) Veröffentlichungstag der Anmeldung: 31.12.2014
(73) Patentinhaber: ZF Friedrichshafen AG, 88046 Friedrichshafen (DE)
(72) Erfinder: BECK, Stefan, 88097 Eriskirch (DE); SIBLA, Christian, 88045 Friedrichshafen (DE); RIEGER, Wolfgang, 88048 Friedrichshafen (DE)
(86) Internationale Anmeldenummer: PCT/EP2013/050355
(87) Internationale Veröffentlichungsnummer: WO 2013/124084

(56) Entgegenhaltungen:
- DE-A1-102009 019 046
- DE-A1-102009 020 442
- US-A1- 2009 197 733

## Beschreibung

Die vorliegende Erfindung betrifft ein Mehrstufengetriebe in Planetenbauweise, insbesondere ein Automatgetriebe für ein Kraftfahrzeug, gemäß dem Oberbegriff der Patentansprüche 1 und 9.

Automatgetriebe, insbesondere für Kraftfahrzeuge, umfassen nach dem Stand der Technik Planetenradsätze, die mittels Reibungs- bzw. Schaltelementen, wie etwa Kupplungen und Bremsen, geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung, verbunden sind.

Ein derartiges Automatgetriebe ist beispielsweise aus der DE 199 12 480 B4 der Anmelderin bekannt. Es umfasst drei Einsteg-Planetenradsätze sowie drei Bremsen und zwei Kupplungen zum Schalten von sechs Vorwärtsgängen und einem Rückwärtsgang, eine Antriebswelle und eine Abtriebswelle, wobei der Steg des ersten Planetenradsatzes mit dem Hohlrad des zweiten Planetenradsatzes und der Steg des zweiten Planetenradsatzes mit dem Hohlrad des dritten Planetenradsatzes ständig verbunden ist und die Antriebswelle direkt mit dem Sonnenrad des zweiten Planetenradsatzes verbunden ist.

Ferner ist bei dem bekannten Getriebe vorgesehen, dass die Antriebswelle über die erste Kupplung mit dem Sonnenrad des ersten Planetenradsatzes und über die zweite Kupplung mit dem Steg des ersten Planetensatzes verbindbar ist, wobei das Sonnenrad des ersten Planetenradsatzes über die erste Bremse mit einem Gehäuse des Getriebes verbindbar ist und der Steg des ersten Planetenradsatzes über die zweite Bremse mit dem Gehäuse des Getriebes verbindbar ist, wobei das Sonnenrad des dritten Planetenradsatzes über die dritte Bremse mit dem Gehäuse des Getriebes verbindbar ist. Die Abtriebswelle des Getriebes ist mit dem Steg des dritten Planetenradsatzes und dem Hohlrad des ersten Planetenradsatzes ständig verbunden.

Ferner ist aus der DE 29 36 969 A1 ein 9-Gang-Mehrstufengetriebe bekannt; es umfasst acht Schaltelemente und vier Planetenradsätze, wobei ein Planetenradsatz als Vorschaltgetriebe dient und das Hauptgetriebe einen Simpson-Satz und einen weiteren als Umkehrgetriebe dienenden Planetenradsatz aufweist.

Weitere Mehrstufengetriebe sind beispielsweise aus der DE 10 2005 010 210 A1 und der DE 10 2006 006 637 A1 der Anmelderin bekannt.

Automatisch schaltbare Fahrzeuggetriebe in Planetenbauweise im Allgemeinen sind im Stand der Technik bereits vielfach beschrieben und unterliegen einer permanenten Weiterentwicklung und Verbesserung. So sollen diese Getriebe einen geringen Bauaufwand, insbesondere eine geringe Anzahl an Schaltelementen erfordern und bei sequentieller Schaltweise Doppelschaltungen, d.h. ein Zu- bzw. Abschalten von zwei Schaltelementen vermeiden, so dass bei Schaltungen in definierten Ganggruppen jeweils nur ein Schaltelement gewechselt wird.

Aus der DE 10 2008 000 428 A1 der Anmelderin ist ein Mehrstufengetriebe in Planetenbauweise bekannt, welches einen Antrieb und einen Abtrieb aufweist, welche in einem Gehäuse angeordnet sind. Bei dem bekannten Getriebe sind zumindest vier Planetenradsätze, im Folgenden als erster, zweiter, dritter und vierter Planetenradsatz bezeichnet, mindestens acht drehbare Wellen - im Folgenden als Antriebswelle, Abtriebswelle, dritte, vierte, fünfte, sechste, siebte und achte Welle bezeichnet - sowie zumindest sechs Schaltelemente, umfassend Bremsen und Kupplungen, vorgesehen, deren selektives Eingreifen verschiedene Übersetzungsverhältnisse zwischen dem Antrieb und dem Abtrieb bewirkt, so dass vorzugsweise neun Vorwärtsgänge und ein Rückwärtsgang realisierbar sind.

Hierbei bilden der erste und der zweite Planetenradsatz, die vorzugsweise als Minus-Planetenradsätze, also mit negativer Standgetriebe-Übersetzung, ausgebildet sind, einen schaltbaren Vorschaltradsatz, wobei der dritte und der vierte Planetenradsatz einen Hauptradsatz bilden.

Bei dem bekannten Mehrstufengetriebe ist vorgesehen, dass die Stege des ersten und des zweiten Planetenradsatzes über die vierte Welle miteinander gekoppelt sind, welche mit einem Element des Hauptradsatzes verbunden ist, dass das Hohlrad des ersten Planetenradsatzes mit dem Sonnenrad des zweiten Planetenradsatzes über die achte Welle gekoppelt ist, welche über eine erste Kupplung mit der Antriebswelle lösbar verbindbar ist und dass das Sonnenrad des ersten Planetenradsatzes mittels der dritten Welle über eine erste Bremse an ein Gehäuse des Getriebes ankoppelbar und über eine zweite Kupplung mit der Antriebswelle lösbar verbindbar ist, wobei das Hohlrad des zweiten Planetenradsatzes mittels der fünften Welle über eine zweite Bremse an ein Gehäuse des Getriebes ankoppelbar ist. Zudem ist die siebte Welle mit zumindest einem Element des Hauptradsatzes ständig verbunden und über eine dritte Bremse an das Gehäuse des Getriebes ankoppelbar, wobei die sechste Welle mit zumindest einem weiteren Element des Hauptradsatzes ständig verbunden und über eine dritte Kupplung mit der Antriebswelle lösbar verbindbar ist; die Abtriebswelle ist mit zumindest einem weiteren Element des Hauptradsatzes ständig verbunden.

Vorzugsweise ist bei dem bekannten Getriebe die vierte Welle ständig mit dem Hohlrad des dritten Planetenradsatzes verbunden, wobei die sechste Welle ständig mit dem Hohlrad des vierten Planetenradsatzes und dem Steg des dritten Planetenradsatzes verbunden und über die dritte Kupplung mit der Antriebswelle lösbar verbindbar ist. Ferner ist die siebte Welle ständig mit den Sonnenrädern des dritten und vierten Planetenradsatzes verbunden und über die dritte Bremse an ein Gehäuse des Getriebes ankoppelbar. Der Abtrieb erfolgt hierbei über die ständig mit dem Steg des vierten Planetenradsatzes verbundene Abtriebswelle. Des Weiteren können der dritte und der vierte Planetenradsatz zu einem Ravigneaux-Satz mit einem gemeinsamen Steg und einem gemeinsamen Hohlrad zusammengesetzt bzw. reduziert sein.

Nach dem Stand der Technik werden die Schaltelemente derartig ausgeführter Mehrstufengetriebe, die üblicherweise als Lamellenkupplungen oder -bremsen ausgeführt sind, hydraulisch betätigt, was in nachteiliger Weise zu hohen hydraulischen Verlusten führt. Um diese Betätigungsverluste zu umgehen, wäre der Einsatz von alternativ betätigbaren Schaltelementen, beispielsweise von elektro-mechanisch betätigbaren Schaltelementen besonders vorteilhaft.

Die Druckschrift DE 10 2009 019046 A1 offenbart ein Mehrstuferigetriebe nach dem Oberbegriff von Anspruch 1.

Zur Ermöglichung der Verwendung von bedarfsgerecht betätigbaren Schaltelementen sollen die Schaltelemente, insbesondere die Kupplungen von außen gut erreichbar sind.

Unter bedarfsgerecht betätigbaren Schaltelementen werden insbesondere Schaltelemente verstanden, welche nur einen geringen Teil oder gar keine Energie verbrauchen, wenn sie ihren Schaltzustand beibehalten. Solche Schaltelemente können zum Beispiel elektro-mechanisch oder elektro-hydraulisch betätigbare Schaltelemente sein.

Der vorliegenden Erfindung liegt die Aufgabe zugrunde, ein Mehrstufengetriebe der eingangs genannten Art vorzuschlagen, welches neun Vorwärtsgänge und einen Rückwärtsgang mit ausreichender Übersetzung aufweiset, bei dem der Bauaufwand, die Bauteilbelastung und die Baugröße optimiert werden und zudem der Wirkungsgrad hinsichtlich der Schlepp- und Verzahnungsverluste verbessert wird. Ferner sollen die Schaltelemente des Getriebes von außen gut erreichbar sein, wodurch der Einbau von elektro-mechanisch betätigbaren Schaltelementen ermöglicht wird. Zudem soll sich das Getriebe sowohl für eine Standard- als auch für eine Front-Quer-Bauweise eignen.

Diese Aufgabe wird erfindungsgemäß durch die Merkmale der Patentansprüche 1 und 9 gelöst. Weitere Vorteile und vorteilhafte Ausgestaltungen gehen aus den Unteransprüchen hervor.

Demnach wird ein erfindungsgemäßes Mehrstufengetriebe in Planetenbauweise vorgeschlagen, welches einen Antrieb und einen Abtrieb aufweist, welche in einem Gehäuse angeordnet sind. Des Weiteren sind zumindest vier Planetenradsätze, im Folgenden als erster, zweiter, dritter und vierter Planetenradsatz bezeichnet, acht drehbare Wellen - im Folgenden als Antriebswelle, Abtriebswelle, dritte, vierte, fünfte, sechste, siebte und achte Welle bezeichnet - sowie sechs vorzugsweise als Lamellenschaltelemente oder als formschlüssige Schaltelemente ausgeführte Schaltelemente, umfassend Bremsen und Kupplungen, vorgesehen, deren selektives Eingreifen verschiedene Übersetzungsverhältnisse zwischen dem Antrieb und dem Abtrieb bewirkt, so dass vorzugsweise neun Vorwärtsgänge und ein Rückwärtsgang realisierbar sind.

Die Planetenradsätze des Getriebes sind vorzugsweise als Minus-Planetenradsätze ausgebildet.

Ein einfacher Minus-Planetenradsatz umfasst bekanntlich ein Sonnenrad, ein Hohlrad und einen Steg, an dem Planetenräder drehbar gelagert sind, die jeweils mit Sonnenrad und Hohlrad kämmen. Hierdurch weist das Hohlrad bei festgehaltenem Steg eine zum Sonnenrad entgegengesetzte Drehrichtung auf. Demgegenüber umfasst ein einfacher Plus-Planetenradsatz ein Sonnenrad, ein Hohlrad und einen Steg, an dem innere und äußere Planetenräder drehbar gelagert sind, wobei alle inneren Planetenräder mit dem Sonnenrad und alle äußeren Planetenräder mit dem Hohlrad kämmen, wobei jedes innere Planetenrad mit jeweils einem äußeren Planetenrad kämmt. Hierdurch weist das Hohlrad bei festgehaltenem Steg die gleiche Drehrichtung auf wie das Sonnenrad und es ergibt sich eine positive Standgetriebeübersetzung.

Gemäß einer bevorzugten Ausführungsform der Erfindung ist das Sonnenrad des ersten Planetenradsatzes mit der fünften Welle verbunden, die über eine dritte Bremse an das Gehäuse des Getriebes ankoppelbar ist, wobei die Antriebswelle über eine erste Kupplung mit der vierten Welle lösbar verbindbar ist, die mit dem Steg des ersten Planetenradsatzes und dem Steg des zweiten Planetenradsatzes verbunden und über eine zweite Bremse an das Gehäuse des Getriebes ankoppelbar ist. Hierbei ist die Antriebswelle über eine zweite Kupplung mit der siebten Welle lösbar verbindbar, welche mit dem Hohlrad des ersten Planetenradsatzes und dem Sonnenrad des zweiten Planetenradsatzes verbunden ist, wobei die Antriebswelle ferner über eine dritte Kupplung mit der achten Welle lösbar verbindbar ist, die mit dem Steg des vierten Planetenradsatzes und dem Hohlrad des dritten Planetenradsatzes verbunden ist.

Des Weiteren ist die sechste Welle des Getriebes mit dem Hohlrad des zweiten Planetenradsatzes und dem Hohlrad des vierten Planetenradsatzes verbunden, wobei die dritte Welle des Getriebes mit dem Sonnenrad des dritten Planetenradsatzes und dem Sonnenrad des vierten Planetenradsatzes verbunden und über eine erste Bremse an das Gehäuse ankoppelbar ist und wobei die Abtriebswelle des Getriebes mit dem Steg des dritten Planetenradsatzes verbunden ist.

Dadurch, dass die erste, zweite und dritte Kupplung an der Antriebswelle des Getriebes angeordnet sind und die übrigen Schaltelemente als Bremsen ausgeführt sind, wird eine gute Erreichbarkeit sämtlicher Schaltelemente des Getriebes gewährleistet, wodurch die Schaltelemente als bedarfsgerecht betätigbare Schaltelemente ausgeführt werden können.

Im Rahmen einer weiteren Ausführungsform der Erfindung wird ausgehend vom beschriebenen Ausführungsbeispiel die dritte Bremse durch eine vierte Kupplung ersetzt, wobei das Sonnenrad des ersten Planetenradsatzes an das Gehäuse des Getriebes gekoppelt ist und die fünfte Welle mit dem Hohlrad des ersten Planetenradsatzes verbunden ist. Hierbei verbindet die vierte Kupplung die mit dem Sonnenrad des zweiten Planetenradsatzes verbundene siebte Welle mit der mit dem Hohlrad des ersten Planetenradsatzes verbundenen fünften Welle lösbar miteinander.

Durch die erfindungsgemäße Ausgestaltung des Mehrstufengetriebes wird eine gute Erreichbarkeit der Schaltelemente des Getriebes gewährleistet, wodurch die Schaltelemente als bedarfsgerecht betätigbare Schaltelemente ausgeführt werden können. Ferner ergeben sich insbesondere für Personenkraftwagen geeignete Übersetzungen sowie eine erhöhte Gesamtspreizung des Mehrstufengetriebes, wodurch eine Verbesserung des Fahrkomforts und eine signifikante Verbrauchsabsenkung bewirkt werden.

Darüber hinaus wird mit dem erfindungsgemäßen Mehrstufengetriebe durch eine geringe Anzahl an Schaltelementen der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Vorwärtsgang und im Rückwärtsgang betätigt wird.

Des Weiteren ergibt sich bei dem erfindungsgemäßen Mehrstufengetriebe ein guter Wirkungsgrad in den Hauptfahrgängen bezüglich der Schlepp- und Verzahnungsverluste.

In vorteilhafter Weise liegen geringe Drehmomente in den Schaltelementen und in den Planetenradsätzen des Mehrstufengetriebes vor, wodurch der Verschleiß bei dem Mehrstufengetriebe in vorteilhafter Weise reduziert wird. Zudem wird durch die geringen Drehmomente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetenradsätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im Folgenden anhand der beigefügten Figuren beispielhaft näher erläutert. In diesen stellen dar:
- Figur 1:: eine schematische Ansicht einer ersten bevorzugten Ausführungsform eines erfindungsgemäßen Mehrstufengetriebes;
- Figur 2:: ein beispielhaftes Schaltschema für ein Mehrstufengetriebe gemäß Figur 1;
- Figur 3:: eine schematische Ansicht einer zweiten bevorzugten Ausführungsform eines erfindungsgemäßen Mehrstufengetriebes; und
- Figur 4:: ein beispielhaftes Schaltschema für ein Mehrstufengetriebe gemäß Figur 3.

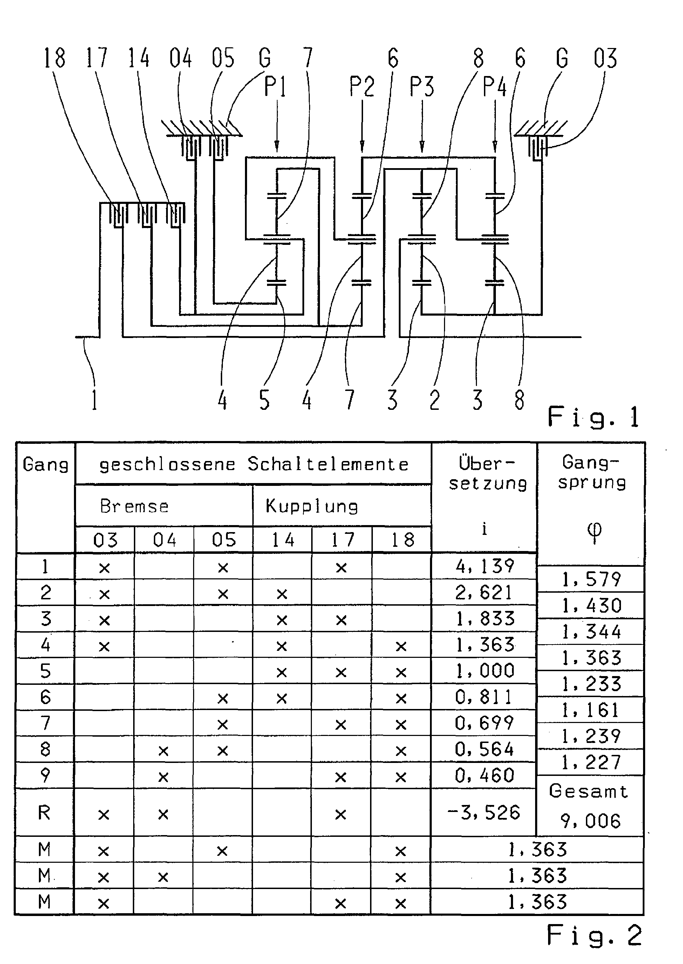

In Figur 1 ist ein erfindungsgemäßes Mehrstufengetriebe mit einer Antriebswelle 1, einer Abtriebswelle 2 und vier Planetenradsätzen P1, P2, P3 und P4 dargestellt, welche in einem Gehäuse G angeordnet sind. Die Planetenradsätze P1, P2, P3, P4 sind bei dem in Figur 1 gezeigten Beispiel als Minus-Planetenradsätze ausgebildet. Gemäß der Erfindung kann zumindest einer der Planetenradsätze P1, P2, P3, P4 als Plus-Planetenradsatz ausgeführt sein, wenn gleichzeitig die Steg- und Hohlradanbindung getauscht und der Betrag der Standgetriebeübersetzung im Vergleich zu der Ausführung als Minus-Planetenradsatz um 1 erhöht wird.

Bei dem gezeigten Ausführungsbeispiel sind die P1, P2, P3, P4 axial betrachtet in der Reihenfolge erster Planetenradsatz P1, zweiter Planetenradsatz P2, dritter Planetenradsatz P3, vierter Planetenradsatz P4 angeordnet. Gemäß der Erfindung sind die axiale Reihenfolge der einzelnen Planetenradsätze und die Anordnung der Schaltelemente frei wählbar, solange es die Bindbarkeit der Elemente zulässt.

Wie aus Figur 1 ersichtlich, sind sechs Schaltelemente, nämlich drei Bremsen 03, 04, 05 und drei Kupplungen 14, 17, 18 vorgesehen. Die räumliche Anordnung der Schaltelemente kann beliebig sein und wird nur durch die Abmessungen und die äußere Formgebung begrenzt. Die Kupplungen und die Bremsen des Getriebes sind vorzugsweise als Reibschaltelemente bzw. Lamellenschaltelemente ausgeführt, können aber auch als formschlüssige Schaltelemente ausgeführt sein.

Mit diesen Schaltelementen ist ein selektives Schalten von neun Vorwärtsgängen und einem Rückwärtsgang realisierbar. Das erfindungsgemäße Mehrstufengetriebe weist insgesamt acht drehbare Wellen auf, nämlich die Wellen 1, 2, 3, 4, 5, 6, 7 und 8, wobei die Antriebswelle die erste Welle 1 und die Abtriebswelle die zweite Welle 2 des Getriebes bilden.

Erfindungsgemäß ist bei dem Mehrstufengetriebe gemäß Figur 1 vorgesehen, dass das Sonnenrad des ersten Planetenradsatzes P1 mit der fünften Welle 5 verbunden ist, welche über eine dritte Bremse 05 an das Gehäuse G des Getriebes ankoppelbar ist, wobei die Antriebswelle 1 über eine erste Kupplung 14 mit der vierten Welle 4 lösbar verbindbar ist, die mit dem Steg des ersten Planetenradsatzes P1 und dem Steg des zweiten Planetenradsatzes P2 verbunden und über eine zweite Bremse 04 an das Gehäuse G ankoppelbar ist. Die Antriebswelle 1 ist zudem über eine zweite Kupplung 17 mit der siebten Welle 7 lösbar verbindbar, welche mit dem Hohlrad des ersten Planetenradsatzes P1 und dem Sonnenrad des zweiten Planetenradsatzes P2 verbunden ist und über eine dritte Kupplung 18 mit der achten Welle 8 lösbar verbindbar, die mit dem Steg des vierten Planetenradsatzes P4 und dem Hohlrad des dritten Planetenradsatzes P3 verbunden ist.

Wie aus Figur 1 ersichtlich, ist die sechste Welle 6 mit dem Hohlrad des zweiten Planetenradsatzes P2 und dem Hohlrad des vierten Planetenradsatzes P4 verbunden, wobei die dritte Welle 3 mit dem Sonnenrad des dritten Planetenradsatzes P3 und dem Sonnenrad des vierten Planetenradsatzes P4 verbunden und über eine erste Bremse 03 an das Gehäuse G ankoppelbar ist und wobei die Abtriebswelle 2 des Getriebes mit dem Steg des dritten Planetenradsatzes P3 verbunden ist.

Hierbei sind die erste, zweite und dritte Kupplung 14, 17, 18 axial betrachtet vorzugsweise nebeneinander angeordnet und können als Lamellenschaltelemente ausgeführt einen gemeinsamen Außenlamellenträger aufweisen. Bei dem gezeigten Ausführungsbeispiel eignet sich insbesondere die erste Bremse 03 für eine Ausführung als Klauenschaltelement, wodurch der Verbrauch signifikant verbessert wird.

In Figur 2 ist ein beispielhaftes Schaltschema eines Mehrstufengetriebes gemäß Figur 1 dargestellt. Für jeden Gang werden drei Schaltelemente geschlossen. Dem Schaltschema können die jeweiligen Übersetzungen i der einzelnen Gangstufen und die daraus zu bestimmenden Gangsprünge bzw. Stufensprünge φ zum nächst höheren Gang beispielhaft entnommen werden, wobei der Wert 9,005 die Spreizung des Getriebes darstellt.

Die Werte für die Standgetriebeübersetzungen der als Minus-Planetenradsätze ausgeführten Planetenradsätze P1, P2, P3, P4 sind bei dem gezeigten Beispiel jeweils -1,727, -1,924, -2,727 und -2,904. Aus Figur 2 wird ersichtlich, dass bei sequentieller Schaltweise jeweils nur ein Schaltelement zugeschaltet und ein Schaltelement abgeschaltet werden muss, da zwei benachbarte Gangstufen zwei Schaltelemente gemeinsam benutzen. Ferner wird ersichtlich, dass eine große Spreizung bei kleinen Gangsprüngen erzielt wird.

Der erste Vorwärts-Gang ergibt sich durch Schließen der ersten und dritten Bremse 03, 05 und der zweiten Kupplung 17, der zweite Vorwärts-Gang durch Schließen der ersten und dritten Bremse 03, 05 und der ersten Kupplung 14, der dritte Vorwärts-Gang durch Schließen der ersten Bremse 03 und der ersten und zweiten Kupplung 14, 17, der vierte Vorwärts-Gang durch Schließen der ersten Bremse 03 und der ersten und dritten Kupplung 14, 18, der bei dem gezeigten Beispiel als Direktgang ausgeführte fünfte Vorwärts-Gang durch Schließen der ersten, zweiten und dritten Kupplung 14, 17, 18, der sechste Vorwärts-Gang durch Schließen der dritten Bremse 05 und der ersten und dritten Kupplung 14, 18, der siebte Vorwärts-Gang durch Schließen der dritten Bremse 05 und der zweiten und dritten Kupplung 17, 18, der achte Vorwärts-Gang durch Schließen der zweiten und dritten Bremse 04, 05 und der dritten Kupplung 18 und der neunte Vorwärtsgang ergibt sich durch Schließen der zweiten Bremse 04 und der zweiten und dritten Kupplung 17, 18, wobei sich der Rückwärtsgang durch Schließen der ersten und zweiten Bremse 03, 04 und der zweiten Kupplung 17 ergibt.

Alternativ kann der vierte Vorwärtsgang durch weitere Schaltkombinationen geschaltet werden, die in Figur 2 mit M bezeichnet sind. Demnach kann sich der vierte Vorwärtsgang durch Schließen der ersten und dritten Bremse 03, 05 und der dritten Kupplung 18 oder durch Schließen der ersten und zweiten Bremse 03, 04 und der dritten Kupplung 18 oder durch Schließen der ersten Bremse 03 und der zweiten und dritten Kupplung 17, 18 ergeben.

Dadurch, dass im ersten Vorwärts-Gang und im Rückwärtsgang die erste Bremse 03 und die zweite Kupplung 17 geschlossen sind, können diese Schaltelemente als Anfahrelemente eingesetzt werden.

Gemäß der Erfindung ergeben sich auch bei gleichem Getriebeschema je nach Schaltlogik und/ oder Standgetriebeübersetzung unterschiedliche Gangsprünge, so dass eine anwendungs- bzw. fahrzeugspezifische Variation ermöglicht wird.

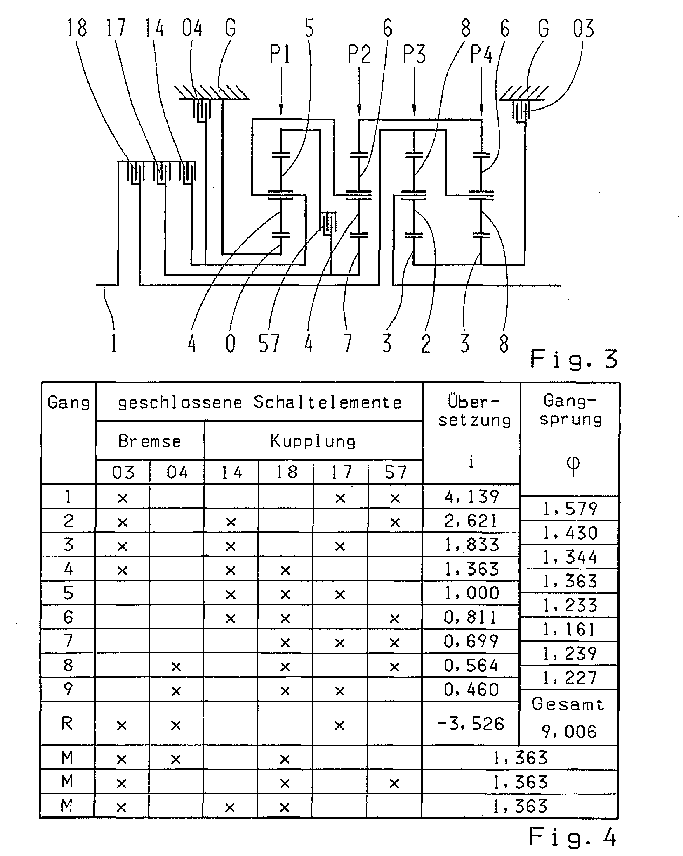

Das in Figur 3 gezeigte Ausführungsbeispiel entspricht dem Ausführungsbeispiel gemäß Figur 1 mit dem Unterschied, dass die dritte Bremse 05 entfällt und durch eine vierte Kupplung 57 ersetzt ist, dass das Sonnenrad des ersten Planetenradsatzes P1 an das Gehäuse G des Getriebes gekoppelt ist und dass die fünfte Welle 5 mit dem Hohlrad des ersten Planetenradsatzes P1 verbunden ist. Die vierte Kupplung 57 verbindet die mit dem Sonnenrad des zweiten Planetenradsatzes P2 verbundene siebte Welle 7 mit der mit dem Hohlrad des ersten Planetenradsatzes P1 verbundenen fünften Welle 5 lösbar miteinander.

Bei dem in Figur 3 dargestellten Getriebe ist die Antriebswelle 1 über eine erste Kupplung 14 mit der vierten Welle 4 lösbar verbindbar, die mit dem Steg des ersten Planetenradsatzes P1 und dem Steg des zweiten Planetenradsatzes P2 verbunden und über eine zweite Bremse 04 an das Gehäuse G ankoppelbar ist. Ferner ist die Antriebswelle 1 über eine zweite Kupplung 17 mit der siebten Welle 7 lösbar verbindbar, welche mit dem Sonnenrad des zweiten Planetenradsatzes P2 verbunden ist und über die vierte Kupplung 57 mit der mit dem Hohlrad des ersten Planetenradsatzes P1 verbundenen fünften Welle 5 lösbar verbindbar ist. Zudem ist die Antriebswelle 1 über eine dritte Kupplung 18 mit der achten Welle 8 lösbar verbindbar, die mit dem Steg des vierten Planetenradsatzes P4 und dem Hohlrad des dritten Planetenradsatzes P3 verbunden ist.

Bezugnehmend auf Figur 3 ist die sechste Welle 6 mit dem Hohlrad des zweiten Planetenradsatzes P2 und dem Hohlrad des vierten Planetenradsatzes P4 verbunden, wobei die dritte Welle 3 mit dem Sonnenrad des dritten Planetenradsatzes P3 und dem Sonnenrad des vierten Planetenradsatzes P4 verbunden und über eine erste Bremse 03 an das Gehäuse G ankoppelbar ist und wobei die Abtriebswelle 2 des Getriebes mit dem Steg des dritten Planetenradsatzes P3 verbunden ist. Das Sonnenrad des ersten Planetenradsatzes P1 ist an das Gehäuse G gekoppelt (Welle 0).

Analog zum Ausführungsbeispiel nach Figur 1 sind die erste, zweite und dritte Kupplung 14, 17, 18 axial betrachtet vorzugsweise nebeneinander angeordnet und können als Lamellenschaltelemente ausgeführt einen gemeinsamen Außenlamellenträger aufweisen.

Gegenstand der Figur 4 ist ein beispielhaftes Schaltschema für ein Mehrstufengetriebe gemäß Figur 3. Die Werte für die Standgetriebeübersetzungen der als Minus-Planetenradsätze ausgeführten Planetenradsätze P1, P2, P3, P4 sind bei dem gezeigten Beispiel jeweils -1,727, -1,924, -2,727 und -2,904.

Der erste Vorwärts-Gang ergibt sich durch Schließen der ersten Bremse 03 und der zweiten und vierten Kupplung 17, 57, der zweite Vorwärts-Gang durch Schließen der ersten Bremse 03 und der ersten und vierten Kupplung 14, 57, der dritte Vorwärts-Gang durch Schließen der ersten Bremse 03 und der ersten und zweiten Kupplung 14, 17, der vierte Vorwärts-Gang durch Schließen der ersten Bremse 03 und der ersten und dritten Kupplung 14, 18, der als Direktgang ausgeführte fünfte Vorwärts-Gang durch Schließen der ersten, zweiten und dritten Kupplung 14, 17, 18, der sechste Vorwärts-Gang durch Schließen der ersten, dritten und vierten Kupplung 14, 18, 57, der siebte Vorwärts-Gang durch Schließen der zweiten, dritten und vierten Kupplung 17, 18, 57, der achte Vorwärts-Gang durch Schließen der zweiten Bremse 04 und der dritten und vierten Kupplung 18, 57 und der neunte Vorwärtsgang ergibt sich durch Schließen der zweiten Bremse 04 und der zweiten und dritten Kupplung 17, 18, wobei sich der Rückwärtsgang durch Schließen der ersten und zweiten Bremse 03, 04 und der zweiten Kupplung 17 ergibt.

Der vierte Vorwärtsgang kann gemäß der Erfindung durch weitere Schaltkombinationen geschaltet werden, die in Figur 4 mit M bezeichnet sind. Demnach kann sich der vierte Vorwärtsgang durch Schließen der ersten und zweiten Bremse 03, 04 und der dritten Kupplung 18 oder durch Schließen der ersten Bremse 03 und der dritten und vierten Kupplung 18, 57 oder durch Schließen der ersten Bremse 03 und der ersten und dritten Kupplung 14, 18 ergeben.

Erfindungsgemäß ist es ferner optional möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Auf der Antriebsseite oder auf der Abtriebsseite können ein Achsdifferential und/ oder ein Verteilerdifferential angeordnet werden.

Im Rahmen einer vorteilhaften Weiterbildung der Erfindung kann die Antriebswelle 1 durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle 1 ständig mit der Kurbelwelle des Antriebs-Motors verbunden ist.

Das erfindungsgemäße Mehrstufengetriebe ermöglicht außerdem die Anordnung eines Torsionsschwingungsdämpfers zwischen Antriebsmotor und Getriebe.

Im Rahmen einer weiteren, nicht dargestellten Ausführungsform der Erfindung kann auf jeder Welle, bevorzugt auf der Antriebswelle 1 oder der Abtriebswelle 2, eine verschleißfreie Bremse, wie z. B. ein hydraulischer oder elektrischer Retarder oder dergleichen, angeordnet sein, was insbesondere für den Einsatz in Nutzkraftfahrzeugen von besonderer Bedeutung ist. Des Weiteren kann zum Antrieb von zusätzlichen Aggregaten auf jeder Welle, bevorzugt auf der Antriebswelle 1 oder der Abtriebswelle 2, ein Nebenabtrieb vorgesehen sein.

Die eingesetzten Reibschaltelemente können als lastschaltbare Kupplungen oder Bremsen ausgebildet sein. Insbesondere können kraftschlüssige Kupplungen oder Bremsen, wie z. B. Lamellenkupplungen, Bandbremsen und/oder Konuskupplungen, verwendet werden.

Ein weiterer Vorteil des hier vorgestellten Mehrstufengetriebes besteht darin, dass auf jeder Welle als Generator und/oder als zusätzliche Antriebsmaschine eine elektrische Maschine anbringbar ist.

### Bezugszeichen

- 0: Welle
- 1: erste Welle, Antriebswelle
- 2: zweite Welle, Abtriebswelle
- 3: dritte Welle
- 4: vierte Welle
- 5: fünfte Welle
- 6: sechste Welle
- 7: siebte Welle
- 8: achte Welle
- 03: erste Bremse
- 04: zweite Bremse
- 05: dritte Bremse
- 14: erste Kupplung
- 17: zweite Kupplung
- 18: dritte Kupplung
- 57: vierte Kupplung
- G: Gehäuse
- P1: erster Planetenradsatz
- P2: zweiter Planetenradsatz
- P3: dritter Planetenradsatz
- P4: vierter Planetenradsatz
- i: Übersetzung
- φ: Stufensprung

## Patentansprüche

1. Mehrstufengetriebe in Planetenbauweise, insbesondere Automatgetriebe für ein Kraftfahrzeug, umfassend eine Antriebswelle (1), eine Abtriebswelle (2) und vier Planetenradsätze (P1, P2, P3, P4), welche in einem Gehäuse (G) angeordnet sind, insgesamt acht drehbare Wellen (1, 2, 3, 4, 5, 6, 7, 8) sowie sechs Schaltelemente (03, 04, 05, 14, 17, 18), umfassend Bremsen (03, 04, 05) und Kupplungen (14, 17, 18), deren selektives Eingreifen verschiedene Übersetzungsverhältnisse zwischen der Antriebswelle (1) und der Abtriebswelle (2) bewirkt, so dass neun Vorwärtsgänge und ein Rückwärtsgang realisierbar sind, **dadurch gekennzeichnet, dass** ein Sonnenrad des ersten Planetenradsatzes (P1) mit einer fünften Welle (5) verbunden ist, welche über eine dritte Bremse (05) an das Gehäuse (G) ankoppelbar ist, wobei die Antriebswelle (1) über eine erste Kupplung (14) mit einer vierten Welle (4) lösbar verbindbar ist, die mit einem Steg des ersten Planetenradsatzes (P1) und einem Steg des zweiten Planetenradsatzes (P2) verbunden und über eine zweite Bremse (04) an das Gehäuse (G) ankoppelbar ist, wobei die Antriebswelle (1) über eine zweite Kupplung (17) mit einer mit einem Hohlrad des ersten Planetenradsatzes (P1) und einem Sonnenrad des zweiten Planetenradsatzes (P2) verbundenen siebten Welle (7) lösbar verbindbar ist und über eine dritte Kupplung (18) mit einer achten Welle (8) lösbar verbindbar ist, die mit einem Steg des vierten Planetenradsatzes (P4) und einem Hohlrad des dritten Planetenradsatzes (P3) verbunden ist, wobei eine sechste Welle (6) mit einem Hohlrad des zweiten Planetenradsatzes (P2) und einem Hohlrad des vierten Planetenradsatzes (P4) verbunden ist und eine dritte Welle (3) mit einem Sonnenrad des dritten Planetenradsatzes (P3) und einem Sonnenrad des vierten Planetenradsatzes (P4) verbunden und über eine erste Bremse (03) an das Gehäuse (G) ankoppelbar ist und wobei die Abtriebswelle (2) mit einem Steg des dritten Planetenradsatzes (P3) verbunden ist.

2. Mehrstufengetriebe nach Anspruch 1, **dadurch gekennzeichnet, dass** der erste, zweite, dritte und vierte Planetenradsatz (P1, P2, P3, P4) als Minus-Planetenradsätze ausgebildet sind.

3. Mehrstufengetriebe nach Anspruch 1 oder 2, **dadurch gekennzeichnet, dass** die Planetenradsätze axial betrachtet in der Reihenfolge erster Planetenradsatz (P1), zweiter Planetenradsatz (P2), dritter Planetenradsatz (P3), vierter Planetenradsatz (P4) angeordnet sind.

4. Mehrstufengetriebe nach einem der vorangehenden Ansprüche, **dadurch gekennzeichnet, dass** die erste, zweite und dritte Kupplung (14, 17, 18) axial betrachtet nebeneinander angeordnet sind, als Lamellenschaltelemente ausgeführt sind und einen gemeinsamen Außenlamellenträger aufweisen.

5. Mehrstufengetriebe nach einem der vorangehenden Ansprüche, **dadurch gekennzeichnet, dass** die Schaltelemente (03, 04, 05, 14, 17, 18) des Getriebes als bedarfsgerecht betätigbare Schaltelemente, insbesondere als elektro-mechanische und/ oder elektro-hydraulische Schaltelemente, ausgeführt sind.

6. Mehrstufengetriebe nach einem der vorangehenden Ansprüche, **dadurch gekennzeichnet, dass** die erste Bremse (03) als formschlüssiges Schaltelement ausgeführt ist.

7. Mehrstufengetriebe nach einem der vorangehenden Ansprüche, **dadurch gekennzeichnet, dass** sich der erste Vorwärts-Gang durch Schließen der ersten und dritten Bremse (03, 05) und der zweiten Kupplung (17), der zweite Vorwärts-Gang durch Schließen der ersten und dritten Bremse (03, 05) und der ersten Kupplung (14), der dritte Vorwärts-Gang durch Schließen der ersten Bremse (03) und der ersten und zweiten Kupplung (14, 17), der vierte Vorwärts-Gang durch Schließen der ersten Bremse (03) und der ersten und dritten Kupplung (14, 18), der fünfte Vorwärts-Gang durch Schließen der ersten, zweiten und dritten Kupplung (14, 17, 18), der sechste Vorwärts-Gang durch Schließen der dritten Bremse (05) und der ersten und dritten Kupplung (14, 18), der siebte Vorwärts-Gang durch Schließen der dritten Bremse (05) und der zweiten und dritten Kupplung (17, 18), der achte Vorwärts-Gang durch Schließen der zweiten und dritten Bremse (04, 05) und der dritten Kupplung (18) und dass sich der neunte Vorwärtsgang durch Schließen der zweiten Bremse (04) und der zweiten und dritten Kupplung (17, 18) ergibt, wobei sich der Rückwärtsgang durch Schließen der ersten und zweiten Bremse (03, 04) und der zweiten Kupplung (17) ergibt.

8. Mehrstufengetriebe nach Anspruch 7, **dadurch gekennzeichnet, dass** sich der vierte Vorwärtsgang alternativ durch Schließen der ersten und dritten Bremse (03, 05) und der dritten Kupplung (18) oder durch Schließen der ersten und zweiten Bremse (03, 04) und der dritten Kupplung (18) oder durch Schließen der ersten Bremse (03) und der zweiten und dritten Kupplung (17, 18) ergibt.

9. Mehrstufengetriebe in Planetenbauweise, insbesondere Automatgetriebe für ein Kraftfahrzeug, umfassend eine Antriebswelle (1), eine Abtriebswelle (2) und vier Planetenradsätze (P1, P2, P3, P4), welche in einem Gehäuse (G) angeordnet sind, insgesamt acht drehbare Wellen (1, 2, 3, 4, 5, 6, 7, 8) sowie sechs Schaltelemente (03, 04, 57, 14, 17, 18), umfassend Bremsen (03, 04) und Kupplungen (14, 17, 18, 57), deren selektives Eingreifen verschiedene Übersetzungsverhältnisse zwischen der Antriebswelle (1) und der Abtriebswelle (2) bewirkt, so dass neun Vorwärtsgänge und ein Rückwärtsgang realisierbar sind, **dadurch gekennzeichnet, dass** ein Sonnenrad des ersten Planetenradsatzes (P1) fest mit dem Gehäuse verbunden ist, wobei die Antriebswelle (1) über eine erste Kupplung (14) mit einer vierten Welle (4) lösbar verbindbar ist, die mit einem Steg des ersten Planetenradsatzes (P1) und einem Steg des zweiten Planetenradsatzes (P2) verbunden und über eine zweite Bremse (04) an das Gehäuse (G) ankoppelbar ist, wobei die Antriebswelle (1) über eine zweite Kupplung (17) mit einer mit einem Sonnenrad des zweiten Planetenradsatzes (P2) verbundenen siebte Welle (7) lösbar verbindbar ist und über eine dritte Kupplung (18) mit einer achten Welle (8) lösbar verbindbar ist, die mit einem Steg des vierten Planetenradsatzes (P4) und einem Hohlrad des dritten Planetenradsatzes (P3) verbunden ist, wobei ein mit einer fünften Welle (5) verbundenes Hohlrad des ersten Planetenradsatzes (P1) über eine vierte Kupplung (57) mit der siebten Welle (7) verbindbar ist, wobei eine sechste Welle (6) mit einem Hohlrad des zweiten Planetenradsatzes (P2) und einem Hohlrad des vierten Planetenradsatzes (P4) verbunden ist und eine dritte Welle (3) mit einem Sonnenrad des dritten Planetenradsatzes (P3) und einem Sonnenrad des vierten Planetenradsatzes (P4) verbunden und über eine erste Bremse (03) an das Gehäuse (G) ankoppelbar ist und wobei die Abtriebswelle (2) mit einem Steg des dritten Planetenradsatzes (P3) verbunden ist.

## Claims

1. Multiple gear transmission of planetary design, in particular automatic transmission for a motor vehicle, comprising a drive shaft (1), an output shaft (2) and four planetary gear sets (P1, P2, P3, P4) which are arranged in a housing (G), a total of eight rotatable shafts (1, 2, 3, 4, 5, 6, 7, 8) and six shifting elements (03, 04, 05, 14, 17, 18), comprising brakes (03, 04, 05) and clutches (14, 17, 18), the selective engagement of which brings about different transmission ratios between the drive shaft (1) and the output shaft (2), with the result that nine forward gears and one reverse gear can be realized, **characterized in that** a sun gear of the first planetary gear set (P1) is connected to a fifth shaft (5) which can be coupled via a third brake (05) to the housing (G), it being possible for the drive shaft (1) to be connected releasably via a first clutch (14) to a fourth shaft (4) which is connected to a spider of the first planetary gear set (P1) and a spider of the second planetary gear set (P2) and can be coupled via a second brake (04) to the housing (G), it being possible for the drive shaft (1) to be connected releasably via a second clutch (17) to a seventh shaft (7) which is connected to an internal gear of the first planetary gear set (P1) and a sun gear of the second planetary gear set (P2) and to be connected releasably via a third clutch (18) to an eighth shaft (8) which is connected to a spider of the fourth planetary gear set (P4) and an internal gear of the third planetary gear set (P3), a sixth shaft (6) being connected to an internal gear of the second planetary gear set (P2) and an internal gear of the fourth planetary gear set (P4), and a third shaft (3) being connected to a sun gear of the third planetary gear set (P3) and a sun gear of the fourth planetary gear set (P4) and being capable of being coupled via a first brake (03) to the housing (G), and the output shaft (2) being connected to a spider of the third planetary gear set (P3).

2. Multiple gear transmission according to Claim 1, **characterized in that** the first, second, third and fourth planetary gear sets (P1, P2, P3, P4) are configured as negative planetary gear sets.

3. Multiple gear transmission according to Claim 1 or 2, **characterized in that**, as viewed axially, the planetary gear sets are arranged in the sequence first planetary gear set (P1), second planetary gear set (P2), third planetary gear set (P3), fourth planetary gear set (P4).

4. Multiple gear transmission according to one of the preceding claims, **characterized in that**, as viewed axially, the first, second and third clutches (14, 17, 18) are arranged next to one another, are configured as multiple disc shifting elements and have a common outer multiple disc carrier.

5. Multiple gear transmission according to one of the preceding claims, **characterized in that** the shifting elements (03, 04, 05, 14, 17, 18) of the transmission are configured as shifting elements which can be actuated according to requirements, in particular as electromechanical and/or electrohydraulic shifting elements.

6. Multiple gear transmission according to one of the preceding claims, **characterized in that** the first brake (03) is configured as a positively locking shifting element.

7. Multiple gear transmission according to one of the preceding claims, **characterized in that** the first forward gear results from closure of the first and third brake (03, 05) and the second clutch (17), the second forward gear results from closure of the first and third brake (03, 05) and the first clutch (14), the third forward gear results from closure of the first brake (03) and the first and second clutch (14, 17), the fourth forward gear results from closure of the first brake (03) and the first and third clutch (14, 18), the fifth forward gear results from closure of the first, second and third clutch (14, 17, 18), the sixth forward gear results from closure of the third brake (05) and the first and third clutch (14, 18), the seventh forward gear results from closure of the third brake (05) and the second and third clutch (17, 18), the eighth forward gear results from closure of the second and third brake (04, 05) and the third clutch (18), and **in that** the ninth forward gear results from closure of the second brake (04) and the second and third clutch (17, 18), the reverse gear resulting from closure of the first and second brake (03, 04) and the second clutch (17).

8. Multiple gear transmission according to Claim 7, **characterized in that** the fourth forward gear results alternatively from closure of the first and third brake (03, 05) and the third clutch (18) or from closure of the first and second brake (03, 04) and the third clutch (18) or from closure of the first brake (03) and the second and third clutch (17, 18).

9. Multiple gear transmission of planetary design, in particular automatic transmission for a motor vehicle, comprising a drive shaft (1), an output shaft (2) and four planetary gear sets (P1, P2, P3, P4) which are arranged in a housing (G), a total of eight rotatable shafts (1, 2, 3, 4, 5, 6, 7, 8) and six shifting elements (03, 04, 57, 14, 17, 18), comprising brakes (03, 04) and clutches (14, 17, 18, 57), the selective engagement of which brings about different transmission ratios between the drive shaft (1) and the output shaft (2), with the result that nine forward gears and one reverse gear can be realized, **characterized in that** a sun gear of the first planetary gear set (P1) is connected fixedly to the housing, it being possible for the drive shaft (1) to be connected releasably via a first clutch (14) to a fourth shaft (4) which is connected to a spider of the first planetary gear set (P1) and a spider of the second planetary gear set (P2) and can be coupled via a second brake (04) to the housing (G), it being possible for the drive shaft (1) to be connected releasably via a second clutch (17) to a seventh shaft (7) which is connected to a sun gear of the second planetary gear set (P2) and to be connected releasably via a third clutch (18) to an eighth shaft (8) which is connected to a spider of the fourth planetary gear set (P4) and an internal gear of the third planetary gear set (P3), it being possible for an internal gear, connected to a fifth shaft (5) of the first planetary gear set (P1), to be connected via a fourth clutch (57) to the seventh shaft (7), a sixth shaft (6) being connected to an internal gear of the second planetary gear set (P2) and an internal gear of the fourth planetary gear set (P4), and a third shaft (3) being connected to a sun gear of the third planetary gear set (P3) and a sun gear of the fourth planetary gear set (P4) and being capable of being coupled via a first brake (03) to the housing (G), and the output shaft (2) being connected to a spider of the third planetary gear set (P3).

## Revendications

1. Boîte de vitesses multi-étagée de construction planétaire, en particulier boîte de vitesses automatique pour un véhicule automobile, comprenant un arbre d'entraînement (1), un arbre de sortie (2) et quatre trains planétaires (P1, P2, P3, P4) qui sont disposés dans un boîtier (G), dans l'ensemble huit arbres rotatifs (1, 2, 3, 4, 5, 6, 7, 8) ainsi que six éléments de commutation (03, 04, 05, 14, 17, 18), comprenant des freins (03, 04, 05) et des embrayages (14, 17, 18), dont l'engagement sélectif provoque différents rapports de démultiplication entre l'arbre d'entraînement (1) et l'arbre de sortie (2), de sorte que neuf vitesses de marche avant et une vitesse de marche arrière puissent être réalisées, **caractérisée en ce qu'**une roue solaire du premier train planétaire (P1) est connectée à un cinquième arbre (5) qui peut être accouplé par le biais d'un troisième frein (05) au boîtier (G), l'arbre d'entraînement (1) pouvant être connecté de manière amovible par le biais d'un premier embrayage (14) à un quatrième arbre (4) qui est connecté à un porte-satellites du premier train planétaire (P1) et à un porte-satellites du deuxième train planétaire (P2) et qui peut être accouplé par le biais d'un deuxième frein (04) au boîtier (G), l'arbre d'entraînement (1) pouvant être connecté de manière amovible par le biais d'un deuxième embrayage (17) à un septième arbre (7) connecté à une couronne dentée du premier train planétaire (P1) et à une roue solaire du deuxième train planétaire (P2) et pouvant être connecté de manière amovible par le biais d'un troisième embrayage (18) à un huitième arbre (8) qui est connecté à un porte-satellites du quatrième train planétaire (P4) et à une couronne dentée du troisième train planétaire (P3), un sixième arbre (6) étant connecté à une couronne dentée du deuxième train planétaire (P2) et à une couronne dentée du quatrième train planétaire (P4) et un troisième arbre (3) étant connecté à une roue solaire du troisième train planétaire (P3) et à une roue solaire du quatrième train planétaire (P4) et pouvant être accouplé par le biais d'un premier frein (03) au boîtier (G) et l'arbre de sortie (2) étant connecté à un porte-satellites du troisième train planétaire (P3).

2. Boîte de vitesses multi-étagée selon la revendication 1, **caractérisée en ce que** le premier, le deuxième, le troisième et le quatrième train planétaire (P1, P2, P3, P4) sont réalisés sous forme de trains planétaires négatifs.

3. Boîte de vitesses multi-étagée selon la revendication 1 ou 2, **caractérisée en ce que** les trains planétaires, considérés axialement, sont disposés dans l'ordre suivant : premier train planétaire (P1), deuxième train planétaire (P2), troisième train planétaire (P3), quatrième train planétaire (P4).

4. Boîte de vitesses multi-étagée selon l'une quelconque des revendications précédentes, **caractérisée en ce que** le premier, le deuxième et le troisième embrayage (14, 17, 18), considérés axialement, sont disposés les uns à côté des autres, sont réalisés sous forme d'éléments de commutation à lamelles et présentent un porte-lamelles extérieur commun.

5. Boîte de vitesses multi-étagée selon l'une quelconque des revendications précédentes, **caractérisée en ce que** les éléments de commutation (03, 04, 05, 14, 17, 18) de la boîte de vitesses sont réalisés sous forme d'éléments de commutation pouvant être actionnés en fonction des besoins, en particulier sous forme d'élément de commutation électromécaniques et/ou électrohydrauliques.

6. Boîte de vitesses multi-étagée selon l'une quelconque des revendications précédentes, **caractérisée en ce que** le premier frein (03) est réalisé sous forme d'élément de commutation à engagement positif.

7. Boîte de vitesses multi-étagée selon l'une quelconque des revendications précédentes, **caractérisée en ce que** la première vitesse de marche avant est obtenue par fermeture du premier et du troisième frein (03, 05) et du deuxième embrayage (17), la deuxième vitesse de marche avant est obtenue par fermeture du premier et du troisième frein (03, 05) et du premier embrayage (14), la troisième vitesse de marche avant est obtenue par fermeture du premier frein (03) et du premier et du deuxième embrayage (14, 17), la quatrième vitesse de marche avant est obtenue par fermeture du premier frein (03) et du premier et du troisième embrayage (14, 18), la cinquième vitesse de marche avant est obtenue par fermeture du premier, du deuxième et du troisième embrayage (14, 17, 18), la sixième vitesse de marche avant est obtenue par fermeture du troisième frein (05) et du premier et du troisième embrayage (14, 18), la septième vitesse de marche avant est obtenue par fermeture du troisième frein (05) et du deuxième et du troisième embrayage (17, 18), la huitième vitesse de marche avant est obtenue par fermeture du deuxième et du troisième frein (04, 05) et du troisième embrayage (18) et **en ce que** la neuvième vitesse de marche avant est obtenue par fermeture du deuxième frein (04) et du deuxième et du troisième embrayage (17, 18), la vitesse de marche arrière étant obtenue par fermeture du premier et du deuxième frein (03, 04) et du deuxième embrayage (17).

8. Boîte de vitesses multi-étagée selon la revendication 7, **caractérisée en ce que** la quatrième vitesse de marche avant est obtenue en variante par fermeture du premier et du troisième frein (03, 05) et du troisième embrayage (18) ou par fermeture du premier et du deuxième frein (03, 04) et du troisième embrayage (18) ou par fermeture du premier frein (03) et du deuxième et du troisième embrayage (17, 18).

9. Boîte de vitesses multi-étagée de construction planétaire, en particulier boîte de vitesses automatique pour un véhicule automobile, comprenant un arbre d'entraînement (1), un arbre de sortie (2) et quatre trains planétaires (P1, P2, P3, P4) qui sont disposés dans un boîtier (G), dans l'ensemble huit arbres rotatifs (1, 2, 3, 4, 5, 6, 7, 8) ainsi que six éléments de commutation (03, 04, 57, 14, 17, 18), comprenant des freins (03, 04) et des embrayages (14, 17, 18, 57), dont l'engagement sélectif provoque différents rapports de démultiplication entre l'arbre d'entraînement (1) et l'arbre de sortie (2), de sorte que neuf vitesses de marche avant et une vitesse de marche arrière puissent être réalisées, **caractérisée en ce qu'**une roue solaire du premier train planétaire (P1) est connectée fixement au boîtier, l'arbre d'entraînement (1) pouvant être connecté de manière amovible par le biais d'un premier embrayage (14) à un quatrième arbre (4) qui est connecté à un porte-satellites du premier train planétaire (P1) et à un porte-satellites du deuxième train planétaire (P2) et qui peut être accouplé au boîtier (G) par le biais d'un deuxième frein (04), l'arbre d'entraînement (1) pouvant être connecté de manière amovible par le biais d'un deuxième embrayage (17) à un septième arbre (7) connecté à une roue solaire du deuxième train planétaire (P2) et pouvant être connecté de manière amovible par le biais d'un troisième embrayage (18) à un huitième arbre (8) qui est connecté à un porte-satellites du quatrième train planétaire (P4) et à une couronne dentée du troisième train planétaire (P3), une couronne dentée du premier train planétaire (P1), connectée à un cinquième arbre (5), pouvant être connectée par le biais d'un quatrième embrayage (57) au septième arbre (7), un sixième arbre (6) étant connecté à une couronne dentée du deuxième train planétaire (P2) et à une couronne dentée du quatrième train planétaire (P4) et un troisième arbre (3) étant connecté à une roue solaire du troisième train planétaire (P3) et à une roue solaire du quatrième train planétaire (P4) et pouvant être accouplé par le biais d'un premier frein (03) au boîtier (G) et l'arbre de sortie (2) étant connecté à un porte-satellites du troisième train planétaire (P3).
